(19) Europäisches Patentamt
European Patent Office
Office européen des brevets

(11) **EP 4 254 265 A1**

(12) **EUROPEAN PATENT APPLICATION**

(43) Date of publication:
**04.10.2023 Bulletin 2023/40**

(21) Application number: **22164607.8**

(22) Date of filing: **28.03.2022**

(51) International Patent Classification (IPC):
**G06N 3/04** *(2023.01)* **G06N 3/08** *(2023.01)*

(52) Cooperative Patent Classification (CPC):
**G06N 3/084; G06N 3/045**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **GOSHEN, Liran**
**Eindhoven (NL)**
• **GRINGAUZ, Asher**
**Eindhoven (NL)**

(74) Representative: **Philips Intellectual Property & Standards**
**High Tech Campus 52**
**5656 AG Eindhoven (NL)**

(54) **TRAINING A NEURAL NETWORK FOR IMAGE PROCESSING**

(57) A mechanism for training a U-net neural network for image processing. During training, a U-net neural network is supplemented with an additional decoder. The additional decoder has fewer skip connections with the encoder of the U-net neural network than the original decoder of the U-net neural network, e.g., zero skip connections. The data produced by the original decoder and the additional decoder is used to define the value for a cost function used to modify the neural network during the training procedure.

FIG. 1

EP 4 254 265 A1

**Description**

FIELD OF THE INVENTION

The present invention relates to the field of image processing, and in particular, to the field of neural networks for image processing.

BACKGROUND OF THE INVENTION

Although neural networks have been investigated for a wide variety of potential uses, one key area is in the processing of image data or images. One particularly useful architecture for processing input data comprising image data is a U-net architecture. Generally, a U-net architecture can be conceptually divided into an encoder and a decoder.

The encoder typically applies a series of blocks ("contracting blocks") to the image data, each contracting block typically comprising one or more convolution layers and a pooling layer (e.g., a maxpooling layer). The output of the encoder is intermediate data, which has a smaller resolution than the image data. The encoder thereby acts as a contracting path.

The decoder also applies a series of blocks ("expansive blocks") to the image data, each expansive block typically comprising an upsampling or upconvolution layer and one or more convolution layers. In existing U-net architectures, each expansive block also comprises a concatenation layer, which concatenates data in the expansive block with data from one of the contracting blocks. Each expansive block thereby receives data from a different contracting block. In this way, there is a skip connection between a contracting block and a corresponding expansive block. The output of the decoder is output data of the neural network, i.e., a processed version of the image data. The decoder thereby acts as an expansive path.

Typically, there are a same number of contracting blocks as expansive blocks, so that each expansive block has a skip connection with a respective contracting block. The encoder may also comprise a further processing block that performs some additional processing (e.g., convolution(s)) on the data produced by the series of contracting blocks before it is passed to the decoder.

More details on the principles of a U-net architecture are set out by Ronneberger, Olaf, Philipp Fischer, and Thomas Brox. "U-net: Convolutional networks for biomedical image segmentation." International Conference on Medical image computing and computer-assisted intervention. Springer, Cham, 2015.

There is an ongoing desire to improve the accuracy and performance of image processing performed by a U-net architecture.

SUMMARY OF THE INVENTION

The invention is defined by the claims.

According to examples in accordance with an aspect of the invention, there is provided a computer-implemented method of training a neural network for processing input data comprising image data, wherein the neural network has a U-net architecture.

The computer-implemented method comprises performing iterative steps of: obtaining a training dataset comprising training input data and corresponding target output data, the training input data comprising sample image data and the target output data being a processed version of the training input data representing an outcome of a desired processing task performed on the training input data; processing the training input data using an encoder of the neural network, to produce intermediate training data; processing the intermediate training data using a first decoder of the neural network to produce first predicted output data, wherein the first decoder has a first number of skip connections with the encoder; processing the intermediate training data using a second decoder to produce second predicted output data, wherein the second decoder has a second number of skip connections with the encoder, the second number being less than the first number; determining the value of a cost function, wherein the cost function is responsive to a first difference, being a difference between the first predicted output data and the target output data, and a second difference, being a difference between the second predicted output data and the target output data; and modifying the neural network responsive to the determined value of the cost function.

Embodiments propose a technique for improved training of a U-net architecture neural network used for processing images. During the training process, rather than using a single decoder, two separate decoders are used. In this way, there are two expansive paths in the neural network architecture. The output of each of the two decoders is used to calculate a value of a cost function (cost function value). The two decoders have different numbers of skip connections with the same encoder of the neural network.

In other words, there is an additional encoder (the second encoder) compared to a conventional U-net neural network. This additional decoder has fewer skip connections to the encoder than the original network. This causes the neural network (trained using a cost function responsive to the additional decoder) to converge to a better model with better generalization, i.e., the neural network learns better encoding representation. In addition, during the training the additional decoder adds an additional gradients path that enables the network to better avoid local minima and improves the network robustness, reducing the chances of overfitting.

The encoder of the neural network may be the only encoder of the neural network, i.e., there may only be a single contracting path.

The target output data comprises a processed version of the training input data. Various purposes or reasons for processing training input data may be envisaged, such as detection of pathologies (such as lesions, tumors or abnormalities); semantic segmentation; image restoration: noise removal; artifact removal; super-resolution; image synthesis and so on. The target output data may represent a version of the training input data that has been subject to processing for performing one or more of these processes.

The target output data may effectively represent a desired or target transformation of the training input data, i.e., the outcome of a desired processing task performed on the training input data. The outcome may, for instance, represent target or desired output data to be provided by a data processing task, e.g., a processed version of the sample image data included in the training input data.

In some examples, the second number is zero. Experimental analysis has identified that providing no skip connections in the second decoder enhances the performance and accuracy of the trained neural network. This is because the effect of greater generalization is achieved and/or enhanced.

When the encoder is formed from a series of contracting blocks, and the first decoder is formed from a series of (first) expansive blocks, the number of contracting blocks and (first) expansive blocks is preferably equal. In such circumstances, the first number may be equal to the number of contracting blocks or (first) expansive blocks, so that each (first) expansive block has a skip connection with a contracting block.

The second decoder may also comprise a series of (second) expansive blocks. The number of contracting blocks and second expansive blocks may be equal. However, in such circumstances, the second number is less than the number of contracting blocks or second expansive blocks. Thus, at least one of the second expansive blocks of the second decoder fails to have a skip connection with any of the contracting blocks of the encoder.

If the encoder is formed from a series of contracting blocks, the second number may always be less than the number of contracting blocks.

The cost function may be configured such that the second difference contributes less to the value of the cost function than the first difference. This approach recognizes that in the inference phase, the output of the first decoder is used as the inferred or processed version of the input data (i.e., as the output data). Configuring the second difference to contribute less to the cost function allows the training of the neural network to be directed or biased towards the output data that is to be used in the inference phase, whilst still benefiting from the advantages of using a second decoder.

The step of determining the value of the cost function may comprise: determining the value of a first cost function, being a cost function responsive to a difference between the first predicted output data and the target output data; determining the value of a second cost function, being a cost function responsive to a difference between the second predicted output data and the target output data; and combining the value of the first cost function and the value of the second cost function to determine the value of the cost function.

The step of combining the value of the first cost function and the value of the second cost function may comprise performing a weighted sum of the value of the first cost function and the value of the second cost function. The weighted sum may be configured such that the second difference contributes less to the value of the cost function than the first difference. Advantages of this approach have been previously described.

The step of modifying the neural network responsive to the determined value of the cost function may comprise modifying the neural network to minimize or reduce the value of the cost function. Other approaches for modifying a neural network responsive to a value of a cost function are well known in the art, e.g., a backpropagation or a gradient descent approach.

The encoder may comprise one or more contracting blocks. Each contracting block may comprise one or more convolution layers and a pooling layer.

The first decoder may comprise one or more first expansive blocks. Each first expansive block may comprise an upsampling or upconvolution layer, one or more convolution layers and a concatenation function or layer.

The second decoder may comprise one or more second expansive blocks, each second expansive block comprising an upsampling or upconvolution layer and one or more convolution layers, wherein at least one of the second expansive blocks does not comprise a concatenation function or layer. Preferably, none of the second expansive blocks comprises a concatenation function or layer.

The neural network may further comprise a pre-processing portion configured to process a portion of the training input data, preferably using one or more fully connected layers. The training input data may comprise a first portion and a second, separate portion.

The step of processing the training input data using an encoder may comprise: processing the second portion of the training input data using the pre-processing portion to produce a processed second portion of the training input data; and processing the first portion and the processed second portion of the training input data using the encoder to produce the intermediate data.

Preprocessing some of the training input data allows non-image features to be included in the processing of image data, e.g., image metadata. This can facilitate production of a more accurately processed image.

The first portion of the training input data may comprise the sample image data. The second portion of the training input data may comprise sample non-image data relevant for the sample image data, e.g., metadata for the sample image data. The sample non-image data may comprise only metadata for the sample image data.

There is also proposed a computer-implemented method of processing input data comprising image data. The computer-implemented method comprises: obtaining input data comprising image data; obtaining a U-net architecture neural network comprising the encoder and the first decoder of the neural network trained by performing the method of a previously described method; processing the input data using the U-net architecture neural network; and outputting the data produced by the first decoder of the U-net architecture neural network as the processed input data.

In some examples, the input data comprises image data and non-image data relevant for the image data. The encoder of the U-net architecture neural network may further comprise a preprocessing portion (such as those previously described).

The step of processing the input data using the U-net architecture neural network may comprise processing the non-image data using the pre-processing portion, processed input dataprocessed input data There is also proposed a computer program product comprising computer program code means which, when executed on a computing device having a processing system, cause the processing system to perform all of the steps of any herein described method.

There is also proposed a processing system configured to train a neural network for processing input data comprising image data by performing any herein disclosed method of training a neural network.

There is also proposed a processing system configured to process input data comprising image data by performing any herein disclosed method of processing input data comprising image data.

The is also proposed a processing system configured to: train a neural network for processing input data comprising image data by performing any herein disclosed method of training a neural network and process input data comprises image data by performing any herein disclosed method of processing input data comprising image data (using the trained neural network).

The skilled person would be readily capable of adapting a processing system for carrying out any herein described method and vice versa.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 illustrates a U-net neural network with an additional decoder;
Figure 2 illustrates a method of training a neural network; and
Figure 3 illustrates a method of performing inference using a neural network.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for training a U-net neural network for image processing. During training, a U-net neural network is supplemented with an additional decoder. The additional decoder has fewer skip connections with the encoder of the U-net neural network than the original decoder of the U-net neural network, e.g., zero skip connections. The data produced by the original decoder and the additional decoder is used to define the value for a cost function used to modify the neural network during the training procedure.

Embodiments are based on the realization that using information produced by an additional decoder during training (which has fewer skip connections) improves the generality of the trained neural network, i.e., the neural network learns better encoding representation. The additional decoder also provides an alternative or additional gradients path (e.g., for gradient descent approaches) that enables the neural network to better avoid local minima during training and improves the robustness of the trained neural network.

Proposed approaches can be used to train a U-net neural network for a variety of image processing applications, such as medical image processing and analysis. Embodiments are particularly advantageous in the medical environment, as such environments produce a large number of images for analysis that share similar or identical characteristics. These images are therefore well suited for analysis using a neural network.

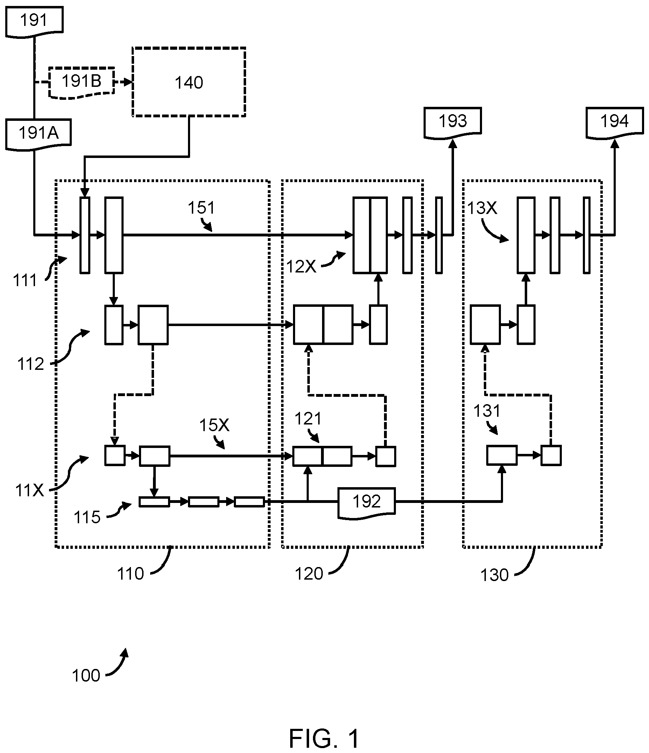

Figure 1 illustrates an approach for training a neural network 100 having a U-net architecture according to an embodiment.

The neural network 100 comprises an encoder 110 and a first decoder 120. The encoder 110 is configured to process input data 191 (comprising at least image data 191A) to produce intermediate training data 192. The intermediate training data 192 is then processed using the first decoder 120 to produce first predicted output data 193.

The encoder 110 processes the input data 191 using a series of contracting blocks, e.g. a first contracting block 111, a second contracting block 112 and so on until a final contracting block 11X is reached. The series of contracting blocks typically comprises X contracting blocks, where X is between 2 and 8. A suitable number of contracting blocks, i.e. a value for X, is 4. Investigations have identified that performance of a U-net architecture neural network usually improves with increasing numbers of contracting blocks, up to maximum of four.

Each contracting block typically comprises one or more convolution layers and a pooling layer, such as a maxpooling layer. In one working example, each contracting block comprises two convolution layers and a maxpooling layer. The output of one contracting block provides the input to a next contracting block in the series. Thus, the output of the first contracting block 111 feeds the input of the second contracting block 112.

A convolution layer may apply a convolution filter having a size of between 3x3 and 5x5 (for input data comprising 2D image data) or between 3x3x3 and 5x5x5 (for input data comprising 3D image data) to received data. In some examples, a convolution layer may further perform a batch normalization and activation function, such as a rectifier linear function (e.g., such as those performed by a rectified linear unit ReLU), on the filtered data.

A pooling layer could be performed by applying a convolution filter with a stride greater than 1. Approaches will be known to the skilled person.

In some examples, the output of the final contracting block 11X provides the intermediate data 192.

In other examples, and as illustrated, the encoder further comprises a further processing block 115. This block 115 performs some additional processing (e.g., convolution(s)) on the output of the series of contracting blocks before it is passed to the decoder. The block 115 may be omitted in some embodiments.

The output of the encoder 110 is the intermediate data 192. The intermediate data has a smaller resolution or (data) size than the input data. Thus, the number of datapoints in the intermediate data is less than in the input data. The encoder 110 thereby acts as a contracting path.

The first decoder 120 processes the intermediate data 192 using a series of expansive blocks, e.g. a first expansive block 121, a second expansive block and so on until a final expansive block 12X is reached. The number of expansive blocks is the same as the number of contracting blocks in the encoder 110.

Each expansive block typically comprises an upsampling or upconvolution layer and one or more convolution layers. An upsampling or upconvolution layer increases the apparent resolution or (data) size of processed data. To improve localization in existing U-net architectures, each expansive block also comprises a concatenation layer, which concatenates data in the expansive block with data from one of the contracting blocks. Each expansive block thereby receives data from a different contracting block. In this way, there is a skip connection between a contracting block and a corresponding expansive block.

By way of example, the first expansive block 121 may have a skip connection 151 to the final contracting block 11X. Similarly, the final expansive block 12X may have a skip connection 151X to the first contracting block 111.

The first decoder 120 thereby has a first number of skip connections with the encoder 110. The first number is typically equal to the number of contracting blocks and/or expansive blocks.

A skip connection 151, 15X is distinguished from the conventional connection between the last contracting block 11X and the first expansive block 121. Typically, the data provided in a skip connection is data from a contracting block that has not undergone a pooling procedure or layer.

The first decoder thereby acts as an expansive path.

The first predicted output data 193 is a processed version of the input data 191. A processed version of the input data represents an outcome of a desired processing task performed in the input data 191, e.g., an image processing task or image analysis task.

The final expansive block 12X of the encoder may perform further processing on data e.g., one or more additional convolution or pooling layers, to produce the first predicted output data 193 representing the processed version of the input data. For instance, a pooling layer may be used to generate a classification of the input data 191, although this is not essential.

The first predicted output data 193 or final output data therefore comprises a processed version of at least the image data 191A. In some examples, the first predicted output data 193 may comprise or consist of image data. However, in other examples, the first predicted output data may comprise a classification or classifications of the image data. Other suitable data representing processed version of at least image data 191A would be apparent to the skilled person.

A conventional approach for training such a neural network 100 would be to make use of a training dataset. The training data includes training input data and corresponding target output data. In particular, the training dataset may comprise a plurality of data entries, each comprising an instance of training input data (comprising at least an instance of sample image data) and a corresponding instance of target output data.

Target output data is a desired or target "ground truth" for an image processing task for which the neural network 100 is being trained (e.g., feature identification or contrast enhancing etc.). In other words, the target output data is a processed version of the training input data representing an outcome of a desired processing task performed on the training input data.

The encoder and first decoder then process each instance of training input data using the neural network 100, to produce respective instances of first predicted output data. The value of a cost function is then determined. The value of the cost function is responsive to first differences, each first difference being the difference between each instance of first predicted output data and the corresponding instance of target output data.

Put in more general terms, generally, the value of the cost function is responsive to a difference between the (overall) target output data and the (overall) first predicted output data.

The value of the cost function is then used to modify the neural network, e.g., by modifying coefficients or parameters of the encoder and/or first decoder.

Approaches for modifying a neural network responsive to a cost function are well known and could employ a stochastic gradient descent implementation or other training procedures.

One example procedure is proposed by Jia, Yangqing, et al. "Caffe: Convolutional architecture for fast feature embedding." Proceedings of the 22nd ACM international conference on Multimedia. 2014. Another approach is disclosed by Isensee, Fabian, et al. "nnu-net: Self-adapting framework for u-net-based medical image segmentation." arXiv preprint arXiv: 1809.10486 (2018).

The present disclosure proposes an improved architecture, labelled $\psi$-net, for training a U-Net architecture neural network.

In the proposed architecture, an additional decoder 130 (or "second decoder") is added to the network, at least during training. This second decoder is connected to the encoder with fewer skip connections, e.g., zero skip connections. During training, the difference between the (second) predicted output data 194 produced by the second decoder and the target output data is used in the cost function, e.g., to influence the value of the cost function.

This technique configures the training to converge the neural network to an improved model with better generalization, i.e., the neural network learns better encoding representation. In addition, during the training, the second decoder adds an additional gradients path that enables the neural network to better avoid local minima and improves the robustness of the trained neural network.

In particular, the present disclosure proposes a new mechanism for generating a value of a cost function. The generated value of the cost function could be employed to modify the neural network using standard or conventional procedures for modifying a neural network.

The second decoder is configured to process the intermediate data 192 in a similar manner to the first decoder 110. The second decoder thereby produces second predicted output data 194. The second decoder 130 is configured to have fewer skip connections with the encoder than the first decoder 120.

In the illustrated example, the second decoder 130 has no skip connections with the encoder 110.

It will be appreciated that the second decoder 130 therefore comprises a series of expansive blocks, e.g. a first expansive block 131, a second expansive block and so on until a final expansive block 13X is reached. The number of expansive blocks may be the same as the number of contracting blocks in the encoder, but this is not essential. Suitable examples of expansive blocks have been previously provided in the context of the first decoder 120, and are equally applicable or usable for the second decoder 130.

The expansive blocks of the first decoder may be labelled "first expansive blocks". The expansive blocks of the second decoder may be labelled "second expansive blocks".

Fewer skip connections can be achieved, for instance, if the second decoder comprises the same number of expansive blocks as the first decoder, by configuring at least one of the expansive blocks of the second decoder ("second expansive block") to not comprise a concatenation layer or function. Thus, if the number of first and second expansive blocks is the same, at least one of the second expansive blocks does not comprise a concatenation function or layer. In some examples, none of the second expansive blocks does comprises a concatenation function or layer.

Put another way, in some examples, at least one of the second expansive blocks may fail to comprise a skip connection to a contracting block of the encoder. In particular examples, none of the second expansive blocks comprises a skip connection to any of the contracting blocks of the encoder.

Another approach could be to form the second decoder from fewer expansive blocks, e.g., by modifying an upsampling or upconvolution function performed by one or more of the expansive blocks.

In some preferred examples, none of the expansive blocks of the second decoder is/are configured to receive data from a corresponding contracting block of the encoder (excepting, of course, the first of the second expansive blocks that receives the intermediate data 192). Thus, in preferred examples, none of the second expansive blocks comprises a skip connection to any of the contracting blocks of the encoder. This is illustrated in Figure 1.

During training of the neural network, the second decoder 130 is configured to produce (for each instance of sample image data) respective instances of second predicted output data 194.

The cost function is responsive to the first differences (previously described) and second differences, being the difference between each instance of second predicted output data and the corresponding instance of target output data.

Put in general terms, the value of the cost function is responsive to a first difference, being the difference between the (overall) target output data and the (overall) first predicted output data, and a second difference, being the difference between the (overall) target output data and the (overall) second predicted output data.

The neural network is then modified responsive to the determined value of the cost function. This may follow any previous or known approach for modifying a neural network.

In particular, modifying the neural network responsive to the determined value of the cost function may comprises modifying the neural network to minimize or reduce the value of the cost function.

The cost function is preferably configured such that the second difference contributes less to the value of the cost function than the first difference.

This approach recognizes that in the inference phase for the neural network, the output of the first decoder may or should be used (and not the second decoder) for performing inference and producing the output data that is used. Configuring the second difference to contribute less to the cost function allows the training of the neural network to focus more heavily on the output that is to be used in the inference phase, whilst still benefiting from the advantages of using a second decoder.

One example of a cost function E(.) is provided by Equation 1. However, the skilled person will appreciate that this is simply one working example, and that other approaches may be adopted.

The modification of the neural network performed during training of the neural network aim to minimize the value of the cost function E(.). $\theta$ represents the parameters vector of the neural network. I represents the training input data and I' represents the target output data. n is the size of the synthesized data. $\lambda$ is a hyperparameter used to scale the effect or influence of the second predicted output data on the training.

$$E(\theta, I, I') = \sum_{i=1}^{n} \Big( L_1\big(\mathbb{W} \cdot U(I_i), I'_i\big) + \lambda L_2\big(\mathbb{W} \cdot D(I_i), I'_i\big) \Big) \tag{1}$$

The functions $L_1(.)$ and $L_2(.)$ are respective cost functions. Suitable cost functions for use as $L_1$ or $L_2$ include an L1-norm cost function, the squared L2-norm cost function or a weighted combination of the same.

It will be appreciated that the cost function E(.) is effectively a combination of two separate cost functions, namely a first cost function $\sum_{i=1}^{n} L_1(.)$ and a second cost function $\sum_{i=1}^{n} L_2(.)$. The combination may be a linear combination, particularly a sum or weighted sum.

Put another way, determining the value of the cost function may comprise: determining the value of a first cost function, being a cost function responsive to a difference between the first predicted output data and the target output data; determining the value of a second cost function, being a cost function responsive to a difference between the second predicted output data and the target output data; and combining the value of the first cost function and the value of the second cost function to determine the value of the cost function.

The combining of the value of the first cost function and the value of the second cost function may comprise performing a weighted sum of the value of the first cost function and the value of the second cost function.

For equation (1), the weighted sum is achieved by scaling the second cost function $\sum_{i=1}^{n} L_2(.)$ by the value of the hyperparameter $\lambda$. It has previously been explained how it could be advantageous to configure the cost function E(.) such that the second difference contributes less to the value of the cost function than the first difference. This could be performed by controlling the value of the hyperparameter $\lambda$ (in equation (1)) to be less than 1. Experimental analysis has identified that a value of between 0.35 and 0.65 (e.g., between 0.4 and 0.6, e.g., between 0.45 and 5.5, e.g., 0.5) for hyperparameter λ provides improved outcome in the accuracy of the trained neural network.

Rather than a weighted sum, other suitable combination procedures for combining the first and second cost functions could be used to advantage, e.g., a non-weighted sum or a multiplication. Preferably, the combination is a linear combination.

The neural network 100 may further comprise a pre-processing portion 140. This may form part of the encoder 110. The pre-processing portion 140 processes a second portion 191B of the input data 191 to produce data for use by the contracting blocks of the encoder.

The input data 191 may therefore be formed of a first portion 191A and a second portion 191B.

The first portion of the input data may comprise the image data. The second portion of the input data may comprise metadata for the image data included in the first portion. Preprocessing some of the input data allows non-image features to be included in the processing of image data, e.g., image metadata. This can facilitate production of a more accurately processed image.

The processing performed by the pre-processing portion may be performed such that the second portion of the input data is converted into an image data format. As an example, the preprocessing portion may be configured to process the second portion 191B of the input data 191 using one or more fully connected layers.

In this way, the neural network can be configured so that the step of processing the input data using an encoder comprises processing the second portion of the training input data using the preprocessing portion to produce a processed second portion of the training input data; and processing the first portion and the processed second portion of the training input data using the encoder to produce the intermediate data.

Approaches for restructuring or processing non-image data to be included in image data processed by an encoder of a U-net architecture are established in the art and are not described in detail for the sake of conciseness.

Generally, such approaches comprise converting the non-image data (i.e., the second portion 191B of the input data 191) to a form or value set that is compatible with the image data, and then concatenating the converted non-image data to the image data to effectively form or synthesize a larger set of image data (which includes values derived from non-image data). Any missing data points can be blanked (e.g., filled with predetermined values such as zero). This synthesized set of image data can then be processed as if it were pure image data.

The skilled person will appreciate how the training technique may be modified to take account of the pre-processing portion, e.g., to also modify parameters, weights and/or coefficients of the pre-processing portion. In particular, the training input data of the training dataset may comprise both first and second portions of training input data.

The remainder of the technique for training is near-identical to that previously described.

Use of a pre-processing portion is not essential. In particular, use of non-image data (e.g., the second portion 191B previously described) could be omitted, and the neural network may simply receive and process image data (i.e., comprise only the first portion 191A).

The neural network trained according to the above-described technique may be used during a later inference process.

During inference, the output of the first decoder may be used as the output data of the trained neural network. Thus, the second decoder is no longer required and could, for instance, be discarded from the neural network when the training process is complete. This reduces the size of the neural network for use during inference.

Table 1 illustrates the result of an evaluation for a neural network trained using the proposed approach.

A first neural network was trained using conventional training techniques for a U-net neural network, i.e., the approach disclosed by Ronneberger, Olaf, Philipp Fischer, and Thomas Brox. "U-net: Convolutional networks for biomedical image segmentation." International Conference on Medical image computing and computer-assisted intervention. Springer, Cham, 2015.

A second neural network was trained using the herein proposed technique, which is labelled ש -net.

As a surrogate task, both neural network were trained to synthesize monochromatic 50keV images from conventional CT images. The training dataset consisted of 14 clinical studies with total of 6,552 images. An RMS error was determined for both neural networks, and a relative improvement calculated. The advantage of the proposed approach is apparent from the reduced RMS error demonstrated in Table 1.

TABLE 1

| Training Technique | RMS Error | Improvement Relative to U-net |
| --- | --- | --- |
| U-net | 15.72 | N/A |
| ש -net | 14.52 | 9% |

The skilled person will appreciate that the task that the neural network is trained to perform will depend upon the task achieved by the target output data.

To provide some non-exhaustive examples, a neural network may be trained to perform: detection of features in image data, such as detection of one or more pathologies within medical image data (e.g., lesions, tumors or abnormalities); image classification (e.g., identification of a scene, view or object represented by the image data), image restoration; noise removal; artefact removal; super-resolution or upsampling; and/or image synthesis, e.g., generating a particular spectral result from CT image data or synthesizing a first imaging modality image from a second imaging modality image (e.g., monoenergy CT image data from spectral CT image data). Thus, the output data of a neural network may comprise: image data; one or more classifications; a measure; and/or a probability. Other suitable examples will be apparent to the skilled person.

Further improvements to the training of a neural network could be achieved using an "automixing" method, described by Freiman, M., Manjeshwar, R., & Goshen, L. (2019). Unsupervised abnormality detection through mixed structure regularization (MSR) in deep sparse autoencoders. Medical physics, 46(5), 2223-2231 and/or European Patent Application having publication No. EP 3,576,050 A1.

Further improvements to the training of a neural network could be achieved using a deep virtual contrast" method, e.g., described by the European Patent Application having publication number EP 3,739,522 A1.

The skilled person would be readily capable of defining a method, computer program and/or processing system that carries out any above-described approach.

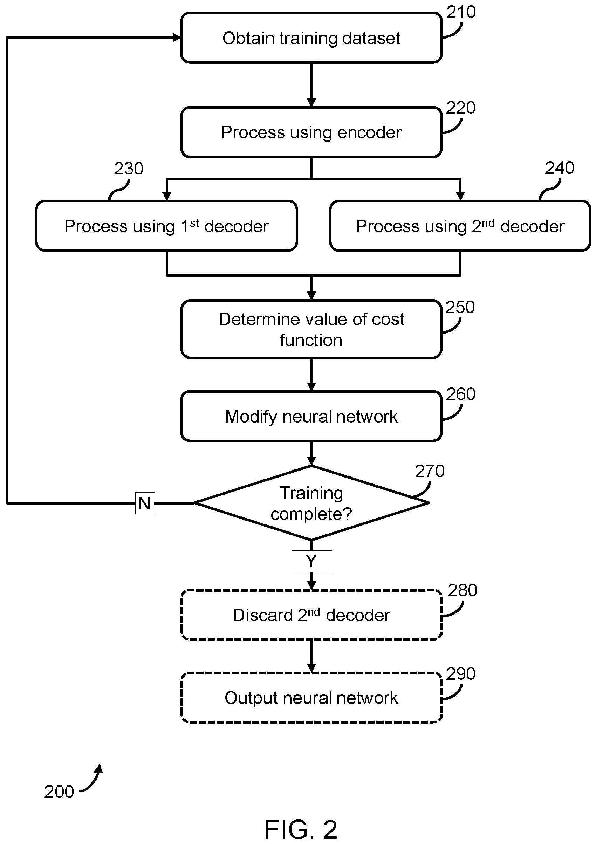

For the sake of completeness, Figure 2 provides a flowchart illustrating a computer-implemented method 200 according to an embodiment. The computer-implemented method is a method for training a neural network for processing input data comprising image data, the neural network having a U-net architecture. The method 200 makes use of the proposed approach described above, and it may be appropriately adapted.

The method 200 comprises a step 210 of obtaining a training dataset comprising training input data and corresponding target output data, the training input data comprising sample image data and the target output data being a processed version of the training input data representing an outcome of a desired processing task performed on the training input data.

The method 200 also comprises a step 220 of processing the training input data using an encoder of the neural network, to produce intermediate training data.

In some examples, the neural network comprises a pre-processing portion configured to process a portion of the training input data using one or more fully connected layers. The training input data may comprise a first portion and a second, separate portion

In these examples, step 220 may comprise processing the second portion of the training input data using the pre-processing portion to produce a processed second portion of the training input data; and processing the first portion and the processed second portion of the training input data using the encoder to produce the intermediate data.

The first portion may, for instance, comprise the sample image data of the training input data. The second portion may, for instance, comprise metadata for the sample image data or other non-image data relevant to the training input data (e.g., providing information on a subject or subjects represented in the sample image data). In some examples, the second portion comprises only the metadata.

The method comprises a step 230 of processing the intermediate training data using a first decoder of the neural network to produce first predicted output data, wherein the first decoder has a first number of skip connections with the encoder.

The method 200 comprises a step 240 of processing the intermediate training data using a second decoder to produce second predicted output data, wherein the second decoder has a second number of skip connections with the encoder, the second number being less than the first number. The second number is preferably zero.

Steps 230 and 240 may be performed consecutively. Preferably, steps 230 and 240 are performed in parallel for improved speed and efficiency of performing method 200.

The method 200 comprises a step 250 of determining the value of a cost function, wherein the cost function is responsive to a first difference, being a difference between the first predicted output data and the target output data, and a second difference, being a difference between the second predicted output data and the target output data.

The cost function may be configured such that the second difference contributes less to the value of the cost function than the first difference.

The method 250 comprises a step 260 of modifying the neural network responsive to the determined value of the cost function.

The steps 210 to 260 of method 200 may be iteratively repeated until one or more predetermined criteria have been met. A single iteration of steps 210 to 260 may be referred to as performing a training epoch. This may be determined in a step 270. The one or more predetermined criteria may effectively define when the training of the neural network has converged or is to be otherwise stopped (e.g., to avoid excessive or continued training).

Of course, it is not essential to repeatedly obtain the input data after the first iteration (e.g., if the training data set is buffered or temporarily stored).

One example of a predetermined criterion is that the steps 210 to 260 have been performed a predetermined number of times, e.g., a predetermined number of training epochs have been performed. The predetermined number may be a number equal to or greater than 100, e.g., equal to or greater than 200, e.g., equal to or greater than 1,000, e.g., equal to or greater than 10,000.

Another suitable predetermined criterion is that the value of the cost function has converged, e.g., has not significantly changed for a predetermined number of iterations. This approach effectively identifies when the prediction of the neural network is sufficiently similar to the target output data.

Yet another suitable predetermined criterion is that the value of the cost function has fallen below some predetermined threshold. This may be defined on a case-by-case basis, as would be apparent to the skilled person.

Other suitable predetermined criteria will be apparent to the skilled person familiar with training neural networks. Step 270 may be met if one or more of the predetermined criteria are met (e.g., if the steps 210 to 226 have been performed the first predetermined number of times and/or if the value of the cost function has converged).

As previously explained, during later inference using the trained neural network, the output of the first decoder may be used as the output data of the trained neural network. Thus, the second decoder is no longer required and could, for instance, be discarded from the neural network when the training process is complete. This reduces the size of the neural network for use during inference.

In this way, method 200 may comprise a step 280 of discarding the second decoder from the neural network. Step 280 may be performed when step 270 determines to stop training the neural network.

Step 280 may be effectively performed by defining the neural network to comprise the trained encoder and first decoder (and, if present, the pre-processing portion).

The method 200 may further comprise a step 290 of outputting the trained neural network. Step 290 may comprise, for instance, storing the trained neural network in a memory or storage system. The stored neural network may be retrieved by a processing system for performing inference.

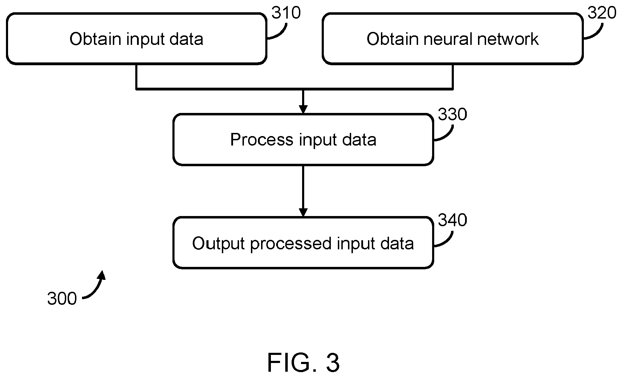

Figure 3 illustrates a computer-implemented method 300 for performing inference using a neural network trained according to a previously described approach.

The computer-implemented method 300 comprises a step 310 of obtaining input data comprising at least image data. The input and/or image data may be obtained from a memory or an image generating system (e.g., a medical imaging system). Other sources for input and/or image data will be readily apparent to the skilled person.

The computer-implemented method also comprises a step 320 of obtaining the neural network parts forming a U-net architecture and trained by performing any previously described method. Thus, step 320 effectively comprises obtaining a U-net architecture neural network comprising the encoder and the first decoder of the neural network trained by performing a previously described method, e.g. method 200. The obtained neural network therefore comprises the encoder and the first decoder. Preferably, the obtained neural network does not comprise the second encoder (e.g., which may be used for training purposes only).

The neural network may be obtained from a memory or neural network producing system (e.g., a system configured to perform method 200 previously described) Other sources for the neural network will be readily apparent to the skilled person.

The computer-implemented method 300 then processes, in a step 330, the input data using the (obtained) U-net architecture neural network. Thus, the U-net architecture neural network obtained in step 320 is used to perform inference of information from the input data obtained in step 310. Step 330 may be performed by a processing system or processing module of a processing system.

Generally, step 330 comprises processing the input data using the encoder of the U-net architecture neural network to produce intermediate processed data; and processing the intermediate processed data using the first decoder of the U-net architecture neural network to produce processed input data.

The computer-implemented method 300 then performs a step 340 of outputting the data produced by the first decoder of the U-net architecture neural network as the processed input data. In this way, the U-net architecture neural network is used to produce processed input data.

Step 340 may comprise, for instance, controlling a user interface to provide a user-perceptible output of the processed input data. In particular, step 340 may comprise controlling a user interface to provide a visual representation of the processed input data.

In some examples, step 340 may comprise outputting the processed input data to a memory or storage unit for storage.

In some examples, the input data obtained in step 310 comprises image data and non-image data. The non-image data may comprise information relevant for the image data, for instance, metadata for the image data or other information on a subject depicted in the image data. In some examples, the non-image data comprises only metadata for the image data.

Suitable examples of relevant non-image data or metadata are well known to the skilled person. For instance, metadata may comprise an indicator of an imaging type, imaging modality, imaging length, imaging intensity, imaging begin time and/or size of the imaging area/volume. Other suitable non-image data include information on the imaged subject. For a medical environment, suitable non-image data includes data such as: such as demographic information (e.g., age, gender, weight, height, body fat percentage etc.), diagnostic information (e.g., predicted diagnosis or predicted outcomes) and/or other medical information (e.g., medical history information).

In such examples, the U-net architecture neural network may comprise a pre-processing portion of the neural network trained using a previously described method.

The step 330 of processing the input data using the U-net architecture neural network may consequently comprise processing the non-image data using the pre-processing portion.

However, it will be appreciated that the use of metadata or other non-image data by the neural network is optional, and that some embodiments may only provide image data for processing by the neural network to produce the processed input data.

Methods 200 and/or 300 may be performed by a processing system.

The skilled person would be readily capable of developing a processing system for carrying out any herein described method. Thus, each step of the flow chart may represent a different action performed by a processing system, and may be performed by a respective module of the processing system.

Embodiments may therefore make use of a processing system. The processing system is configured to carry out any herein described method, e.g., methods 200 and/or 300 described with reference to Figures 2 and 3.

The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method.

In some alternative implementations, the functions noted in the block diagram(s) or flow chart(s) may occur out of the order noted in the Figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

**Claims**

1. A computer-implemented method (200) of training a neural network (100) for processing input data (191) comprising image data (191A), the neural network having a U-net architecture and the computer-implemented method comprising performing iterative steps of:

obtaining (210) a training dataset comprising training input data and corresponding target output data, the training input data comprising sample image data and the target output data being a processed version of the training input data representing an outcome of a desired processing task performed on the training input data;

processing (220) the training input data using an encoder (110) of the neural network, to produce intermediate training data;

processing (230) the intermediate training data using a first decoder (120) of the neural network to produce first predicted output data, wherein the first decoder has a first number of skip connections (151, 151X) with the encoder;

processing (240) the intermediate training data using a second decoder (130) to produce second predicted output data, wherein the second decoder has a second number of skip connections with the encoder, the second number being less than the first number;

determining (250) the value of a cost function, wherein the cost function is responsive to a first difference, being a difference between the first predicted output data and the target output data, and a second difference, being a difference between the second predicted output data and the target output data; and

modifying (260) the neural network responsive to the determined value of the cost function.

2. The computer-implemented method of claim 1, wherein the second number is zero.

3. The computer-implemented method of any of claims 1 to 2, wherein the cost function is configured such that the second difference contributes less to the value of the cost function than the first difference.

4. The computer-implemented method of any of claims 1 to 3, wherein the step (250) of determining the value of the cost function comprises:

determining the value of a first cost function, being a cost function responsive to a difference between the first predicted output data and the target output data;

determining the value of a second cost function, being a cost function responsive to a difference between the second predicted output data and the target output data; and

combining the value of the first cost function and the value of the second cost function to determine the value of the cost function.

5. The computer-implemented method of claim 4, wherein the step of combining the value of the first cost function and the value of the second cost function comprises performing a weighted sum of the value of the first cost function and the value of the second cost function.

6. The computer-implemented method of any of claims 1 to 5, wherein the step (260) of modifying the neural network responsive to the determined value of the cost function comprises modifying the neural network to minimize or reduce the value of the cost function.

7. The computer-implemented method of any of claims 1 to 6, wherein the encoder (110) comprises one or more contracting blocks (111, 112, 11X), each contracting block comprising one or more convolution layers and a pooling layer.

8. The computer-implemented method of any of claims 1 to 7, wherein:

the first decoder (120) comprises one or more first expansive blocks (121, 12X), each first expansive block comprising an upsampling or upconvolution layer, one or more convolution layers and a concatenation function; and

the second decoder (130) comprises one or more second expansive blocks (131, 13X), each second expansive block comprising an upsampling or upconvolution layer and one or more convolution layers, wherein at least one of the second expansive blocks does not comprise a concatenation function.

9. The computer-implemented method of claim 8, wherein none of the second expansive blocks comprises a concatenation function.

10. The computer-implemented method of any of claims 1 to 9, wherein:

the neural network (100) further comprises a pre-processing portion (140) configured to process a portion of the training input data using one or more fully connected layers;
the training input data comprises a first portion and a second, separate portion; and
the step of processing the training input data using an encoder comprises:

processing the second portion of the training input data using the pre-processing portion to produce a processed second portion of the training input data; and
processing the first portion and the processed second portion of the training input data using the encoder to produce the intermediate data.

11. The computer-implemented method of claim 10, wherein the first portion of the training input data comprises the sample image data and/or wherein the second portion of the training input data comprises sample non-image data relevant for the sample image data.

12. A computer-implemented method (300) of processing input data (191) comprising image data (191A), the computer-implemented method comprising:

obtaining (310) the input data (191) comprising image data (191A);
obtaining (320) a U-net architecture neural network comprising the encoder (110) and the first decoder (120) of the neural network (100) trained by performing the method (200) of any of claims 1 to 11;
processing (330) the input data using the U-net architecture neural network (110, 120); and
outputting (340) the data produced by the first decoder of the U-net architecture neural network as the processed input data.

13. The computer-implemented method (300) of claim 12, wherein:

the input data (191) further comprises non-image data (191B) relevant for the image data;
the encoder (110) of the U-net architecture neural network comprises a pre-processing portion;
the encoder and first decoder are of the neural network trained by performing the method (200) of any of claims 10 to 11; and
processing (330) the input data using the U-net architecture neural network (110, 120) comprises processing the non-image data (191B) using the pre-processing portion.

14. A computer program product comprising computer program code means which, when executed on a computing device having a processing system, cause the processing system to perform all of the steps of the method according to any of claims 1 to 13.

15. A processing system configured to:

train a neural network (100) for processing input data (191) comprising image data (191A) by performing the method (200) of any of claims 1 to 11; and/or
process input data comprising image data by performing the method (300) of any of claims 12 or 13.

FIG. 1

Obtain training dataset — 210

Process using encoder — 220

230 — Process using 1st decoder     Process using 2nd decoder — 240

Determine value of cost function — 250

Modify neural network — 260

Training complete? — 270

N

Y

Discard 2nd decoder — 280

Output neural network — 290

200

FIG. 2

Obtain input data 310

Obtain neural network 320

Process input data 330

Output processed input data 340

300

# FIG. 3

**EP 4 254 265 A1**

## EUROPEAN SEARCH REPORT

**Application Number**

EP 22 16 4607

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROELS JORIS ET AL: "Domain Adaptive Segmentation In Volume Electron Microscopy Imaging", 2019 IEEE 16TH INTERNATIONAL SYMPOSIUM ON BIOMEDICAL IMAGING (ISBI 2019), IEEE, 8 April 2019 (2019-04-08), pages 1519-1522, XP033576522, DOI: 10.1109/ISBI.2019.8759383 [retrieved on 2019-07-10] * page 1519 - page 1522; figures 1-4 * | 1-15 | INV. G06N3/04 G06N3/08 |
| X | VARUN KANNADI VALLOLI ET AL: "W-Net: Reinforced U-Net for Density Map Estimation", ARXIV.ORG, CORNELL UNIVERSITY LIBRARY, 201 OLIN LIBRARY CORNELL UNIVERSITY ITHACA, NY 14853, 27 March 2019 (2019-03-27), XP081158495, * Sections 3.1-3.2, 4-5; figures 1-3 * | 1-15 | |
| A | MYRONENKO ANDRIY ED - ANDREA K ET AL: "3D MRI Brain Tumor Segmentation Using Autoencoder Regularization", 26 January 2019 (2019-01-26), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 311 - 320, XP047502370, ISBN: 978-3-319-10403-4 [retrieved on 2019-01-26] * abstract; figures 1-2 * * Sections 2-5 * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 9 September 2022 | Cilia, Elisa |

EPO FORM 1503 03.82 (P04C01)

page 1 of 2

Europäisches
Patentamt

European
Patent Office

Office européen
des brevets

## EUROPEAN SEARCH REPORT

**Application Number**

EP 22 16 4607

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAZA LAURA ET AL: "Cerberus: A Multi-headed Network for Brain Tumor Segmentation", 26 March 2021 (2021-03-26), ARXIV.ORG, PAGE(S) 342 - 351, XP047581137, * the whole document * | 1-15 | |
| A | WO 2021/198241 A1 (ZEISS CARL AG [DE]) 7 October 2021 (2021-10-07) * the whole document * | 1-15 | |
| A | NARINDER SINGH PUNN ET AL: "Modality specific U-Net variants for biomedical image segmentation: A survey", ARXIV.ORG, CORNELL UNIVERSITY LIBRARY, 201 OLIN LIBRARY CORNELL UNIVERSITY ITHACA, NY 14853, 2 January 2022 (2022-01-02), XP091127387, * the whole document * | 1-15 | |

**TECHNICAL FIELDS SEARCHED (IPC)**

The present search report has been drawn up for all claims

| Place of search | Date of completion of the search | Examiner |
|---|---|---|
| The Hague | 9 September 2022 | Cilia, Elisa |

EPO FORM 1503 03.82 (P04C01)

page 2 of 2

## ANNEX TO THE EUROPEAN SEARCH REPORT
## ON EUROPEAN PATENT APPLICATION NO.

**EP 22 16 4607**

This annex lists the patent family members relating to the patent documents cited in the above-mentioned European search report.
The members are as contained in the European Patent Office EDP file on
The European Patent Office is in no way liable for these particulars which are merely given for the purpose of information.

**09-09-2022**

| Patent document cited in search report | Publication date | Patent family member(s) | Publication date |
|---|---|---|---|
| WO 2021198241 A1 | 07-10-2021 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3576050 A1

- EP 3739522 A1


### Non-patent literature cited in the description

- U-net: Convolutional networks for biomedical image segmentation. **PHILIPP FISCHER ; THOMAS BROX.** International Conference on Medical image computing and computer-assisted intervention. Springer, 2015
- **JIA ; YANGQING et al.** Caffe: Convolutional architecture for fast feature embedding. *Proceedings of the 22nd ACM international conference on Multimedia,* 2014
- **ISENSEE ; FABIAN et al.** nnu-net: Self-adapting framework for u-net-based medical image segmentation. *arXiv: 1809.10486,* 2018

- U-net: Convolutional networks for biomedical image segmentation. **RONNEBERGER ; OLAF ; PHILIPP FISCHER ; THOMAS BROX.** International Conference on Medical image computing and computer-assisted intervention. Springer, 2015
- **FREIMAN, M. ; MANJESHWAR, R. ; GOSHEN, L.** Unsupervised abnormality detection through mixed structure regularization (MSR) in deep sparse autoencoders. *Medical physics,* 2019, vol. 46 (5), 2223-2231